# EUROPEAN PATENT SPECIFICATION

(11) **EP 2 403 285 B1**
(45) Date of publication and mention of the grant of the patent: **17.10.2018**
(21) Application number: 10788867.9
(22) Date of filing: 07.06.2010
(51) Int. Cl.: H04W 16/18, H04W 24/02, H04W 8/26, H04W 36/08

(54) **METHOD AND APPARATUS FOR REPLACING WIRELESS NETWORK BASED ON EQUIVALENT PUBLIC LAND MOBILE NETWORK (EPLMN)**
VERFAHREN UND VORRICHTUNG ZUM AUSTAUSCH EINES DRAHTLOSEN NETZWERKS AUF BASIS EINES ÄQUIVALENTEN ÖFFENTLICHEN LANDGESTÜTZTEN MOBILFUNKNETZES
PROCÉDÉ ET APPAREIL DE REMPLACEMENT D'UN RÉSEAU SANS FIL BASÉ SUR UN RÉSEAU MOBILE TERRESTRE PUBLIC ÉQUIVALENT (EPLMN)

(30) Priority: 13.10.2009 CN 200910180297
(43) Date of publication of application: 04.01.2012
(73) Proprietor: ZTE Corporation, Shenzhen, Guangdong 518057 (CN)
(72) Inventor: LIU, Fulei, Shenzhen Guangdong 518057 (CN)
(74) Representative: Petraz, Gilberto Luigi
(86) International application number: PCT/CN2010/073627
(87) International publication number: WO 2010/145471

(56) References cited:
- WO-A1-2009/096496
- CN-A- 101 483 853
- GB-A- 2 381 414

## Description

### Technical Field

The present invention relates to the mobile communication technical field, and particularly, to a method and apparatus for replacing a wireless network based on the Equivalent Public Land Mobile Network (EPLMN).

### Background of the Related Art

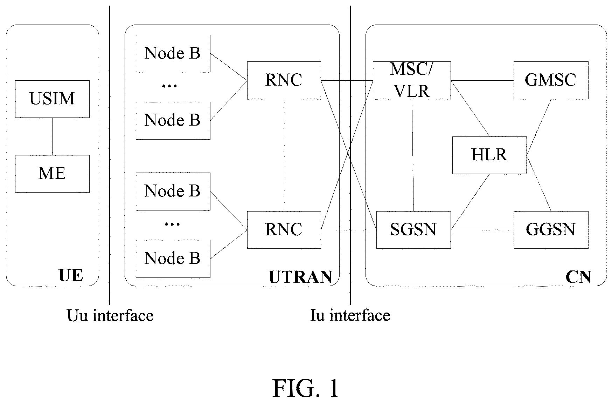

The networking of generally used wireless networks in the current communication technical field, such as the Wideband Code-Division Multiple Access (WCDMA) network, is shown in FIG. 1, and the Core Network (CN) comprises the Gateway Mobile Switching Center (GMSC), Gateway GPRS Support Node (GGSN), Home Location Register (HLR), Mobile Switching Centre (MSC)/Visiting Location Register (VLR), and Serving GPRS Support Node (SGSN). The Core Network is connected with the UMTS Terrestrial Radio Access Network (UTRAN, UMTS (Universal Mobile Telecommunications System)) namely the Radio Network Controller (RNC) of the wireless access network side, and each RNC connects with a great many Node B(s) (the base station of the WCDMA system), and one Node B is responsible for providing the wireless communication service for users in one geographical location area, and one geographical location area includes one or more cells. Each User Equipment (UE) includes a Universal Subscriber Identity Module (USIM) and a Mobile Equipment (ME).

At present, the replacement of the WCDMA network uses the hard replacement, and the specific process is: dividing the whole wireless network into a plurality of areas, removing the old network equipment one area by one area, then installing the new network equipment, and the border of the new and old networks being required to configure the neighbor cell to each other for the purpose of not affecting the user migrating in the border of the new and old networks to use the wireless communication service. Then the new network equipment is powered on and services are provided for wireless network users.

The drawbacks of this existing replacement method are that: 1)there is not any network to provide service for users in the process of removing the old network equipment and installing the new network equipment, namely, since there is not any signal, the user held mobile equipment, such as the mobile phone or data card and so on, is unable to carry out the services such as voice call and downloading the data and so on in this process of discontinued network service; 2) since it is that all the cells covered by the WCDMA network are cutover by dividing into areas, the border of the new and old networks will change continuously along with the replacement of the network one area by one area, however the neighbor cell relationship of the new and old networks requires changing once and modifying once in the equipment of old network and new network for every change of the border, so the neighbor cell relationship after dividing is required to make and update a large quantity of data in time according to different cases of the network, which increases the workload of each cutover stage; 3) the cutover by dividing into areas will result in the different frequency or same frequency interworking between equipment of a good many and different manufacturers, which is likely to affect the service quality, produce the service delay, and result in that the Key Performance Indicator (KPI) of the network is unable to be ensured and the user experience is very bad; 4) the network replacement generally requires a short time, but the quantity of the data made in each stage of the cutover by dividing into areas is large and there are many operation steps, so the error easily occurs, and the network rollback is difficult after the error occurring. Since the just installed new network equipment requires removing, the old network equipment is re-installed, and original data are imported in the rollback process, so the method for replacing the network in the prior art should spend at least a plurality of hours during the rollback, and operation steps are cumbersome, which brings great risk for operators and equipment manufacturers.

The features of the preamble of the independent claims are known from GB2381414A.

### Summary of the Invention

The technical problem to be solved in the present invention is to provide a method and apparatus for replacing the wireless network based on the EPLMN as defined in the independent claims, which overcomes the drawback that there is not network to provide service for users in the process of removing the old network equipment and installing the new network equipment.

In order to solve the above technical problem, a method for replacing a wireless network based on an Equivalent Public Land Mobile Network (EPLMN) is provided, and comprises following steps of:
establishing a new network and configuring a Public Land Mobile Network (PLMN) of the new network as a second Public Land Mobile Network, configuring a cell of the new network with a same station address for each cell of a current network as an inter-frequency neighbor cell, and configuring a re-selection parameter for reselecting the cell of the new network for each cell of the current network; a Home Public Land Mobile Network (HPLMN) used by said current network to be replaced is a first Public Land Mobile Network;
a core network side of the current network sending an EPLMN list including the first Public Land Mobile Network and the second Public Land Mobile Network to a user which needs to migrate; and
changing the PLMN of the new network from the second Public Land Mobile Network to the first Public Land Mobile Network after all of the users of the current network migrate into the new network, and deleting the EPLMN list of the core network side of the new network.

Wherein the step of establishing the new network comprises: establishing network elements of the core network side and a wireless network side, and configuring a base station of the cell of the new network with the same station address beside a base station of the cell of the current network.

Wherein the step of configuring the cell of the new network with the same station address for each cell of the current network as the inter-frequency neighbor cell comprises: configuring an identification (ID) of the cell of the new network to a radio network controller to which a base station of the cell of the current network with the same station address belongs.

Besides, before users migrate to the new network, this method further comprises: grouping users of the current network based on an International Mobile Subscriber Identity (IMSI), thereby users being able to migrate according to groups.

A method for replacing a wireless network which is able to roll back is also provided, and comprises following steps of:
establishing a new network and configuring a Public Land Mobile Network (PLMN) of the new network as a second Public Land Mobile Network, configuring a cell of the new network with a same station address for each cell of a current network as an inter-frequency neighbor cell, configuring a cell of the current network with a same station address for each cell of the new network as an inter-frequency neighbor cell, and configuring a re-selection parameter for reselecting the cell of the new network for each cell of the current network; a Home Public Land Mobile Network (HPLMN) used by said current network to be replaced is a first Public Land Mobile Network;
a core network side of the current network sending an EPLMN list including the first Public Land Mobile Network and the second Public Land Mobile Network to a user which needs to migrate; and
changing the PLMN of the new network from the second Public Land Mobile Network to the first Public Land Mobile Network after all of the users of the current network migrate into the new network, and deleting the EPLMN list of the core network side of the new network.

Besides, after establishing the new network, this method further comprises: configuring a cell of the current network without the same station address for each cell of the new network as the inter-frequency neighbor cell.

Besides, if a fault occurs and the new network is unable to work normally after the user of the current network migrate into the new network, then this method further comprises following steps of:
changing a value of a cell state parameter "Cell Reserved for Operator Use" of the new network into "reserved" from a default value "not reserved", and making the user which migrates into the new network roll back to the current network; and
when the new network is able to work normally after being repaired, changing the cell state parameter of the new network into the default value "not reserved" over again, and making the user which migrates into the new network enter into the cell of the new network to receive mobile communication service again.

An apparatus for replacing a wireless network based on an Equivalent Public Land Mobile Network (EPLMN) is also provided, and comprises: a network configuration module, a user migration module and a network change and replacement module, wherein
a Home Public Land Mobile Network (HPLMN) used by a current network to be replaced is a first Public Land Mobile Network;
said network configuration module is configured to: configure a Public Land Mobile Network (PLMN) of an established new network as a second Public Land Mobile Network, and configure a cell of a new network with a same station address for each cell of the current network as an inter-frequency neighbor cell, and configure a re-selection parameter for reselecting the cell of the new network for each cell of the current network;
said user migration module is configured to: send an EPLMN list including the first Public Land Mobile Network and the second Public Land Mobile Network to a user which needs to migrate from the current network to the new network;
said network change and replacement module is configured to: change the PLMN of the new network from the second Public Land Mobile Network to the first Public Land Mobile Network after all of the users of the current network migrate into the new network, and delete the EPLMN list of the core network side of the new network.

An apparatus for replacing a wireless network which is able to roll back is also provided, and comprises: a network configuration module, a user migration module and a network change and replacement module, wherein
a Home Public Land Mobile Network (HPLMN) used by a current network to be replaced is a first Public Land Mobile Network;
said network configuration module is configured to: configure a Public Land Mobile Network (PLMN) of an established new network as a second Public Land Mobile Network, configure a cell of a new network with a same station address for each cell of the current network as an inter-frequency neighbor cell, configure a cell of the current network with a same station address for each cell of the new network as an inter-frequency neighbor cell, and configure a re-selection parameter for reselecting the cell of the new network for each cell of the current network;
said user migration module is configured to: send an EPLMN list including the first Public Land Mobile Network and the second Public Land Mobile Network to a user which needs to migrate from the current network to the new network;
said network change and replacement module is configured to: change the PLMN of the new network from the second Public Land Mobile Network to the first Public Land Mobile Network after all of the users of the current network migrate into the new network, and delete the EPLMN list of the core network side of the new network.

Besides, said network configuration module is further configured to: configure a cell of the current network without the same station address for each cell of the new network as the inter-frequency neighbor cell.

Besides, said network configuration module is further configured to: change a value of a cell state parameter "Cell Reserved for Operator Use" of the new network into "reserved" from a default value "not reserved" when a fault occurs and the new network is unable to work normally, and make the user which migrates into the new network roll back to the current network; and when the new network is able to normally work after being repaired, change the cell state parameter of the new network into the default value "not reserved", and make the user which migrates into the new network enter into the cell of the new network to receive mobile communication service over again.

Comparing with the prior art, the present invention at least has following advantages:
the method and apparatus for replacing the wireless network based on the EPLMN of the present invention are used for establishing the new network and configuring its PLMN as the second public land mobile network, and each cell of the current network being configured with the cell of the new network with the same station address as the inter-frequency neighbor cell; the core network side of the current network sending the EPLMN list including the first public land mobile network and the second public land mobile network to the user which needs to migrate every time; and the PLMN of the new network is changed from the second public land mobile network to the first public land mobile network after all the users of the current network migrate to the new network, and deleting the EPLMN list of the core network side of the new network. Since the users have gradually migrated into the established new network before removing the old current network equipment, and when the new network is able to provide communication service for the migrated users, the current network still provides communication service for users which have not migrated into the new network at the same time, and therefore, the drawback of interrupting providing communication service for users in the process of removing the old network equipment and installing the new network equipment in the prior art is overcome.

Besides, since the present invention is based on the IMSI to group users of the current network, hence the present invention is able to preciously control the number of users which migrate to the new network, and is also able to carry out special processing regarding the individual user. The migration operation is only required to send the EPLMN list including the first public land mobile network and the second public land mobile network to users, and users will actively search the network with better signal in the EPLMN list to enter, and therefore, making and updating a great amount of data in the prior art are omitted, and the workload of replacing the network is reduced.

The technical scheme of the present invention will not produce the service delay, and ensure the KPI of the network without affecting the user experience.

When a fault occurs and the new network is unable to work normally and the present invention carries out the network rollback, it is only required to change the cell state parameter of the new network, so comparing with the prior art, the network rollback is easier, and the risk of operator and equipment manufacturer is greatly reduced.

### Brief Description of Drawings

FIG. 1 is a schematic diagram of the networking of the WCDMA network;
FIG. 2 is a flow chart of the method for replacing the wireless network based on the EPLMN according to the first example of the present invention;
FIG. 3 is schematic diagram of the method for replacing the wireless network which is able to roll back according to the second example of the present invention;
FIG. 4 is a schematic diagram of the apparatus for replacing the wireless network based on the EPLMN according to the third example of the present invention.

### Preferred Embodiments of the Present Invention

Below it will describe the method and apparatus for replacing the wireless network based on the EPLMN of the present invention in detail with reference to the figures and preferable examples.

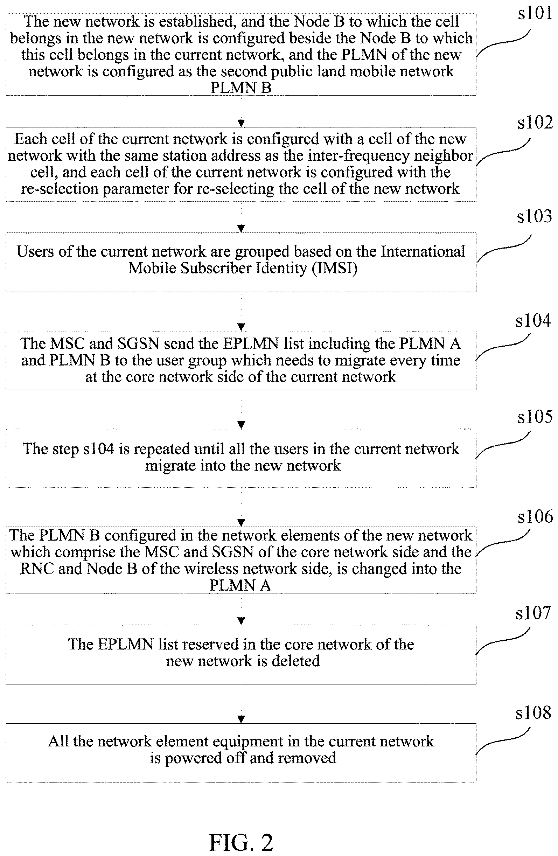

The first example of the present invention provides a method for replacing the wireless network based on the EPLMN, wherein it is assumed that the Home Public Land Mobile Network (HPLMN) used by the current network to be replaced is the first public land mobile network PLMN A, and this method comprises three stages, as shown in FIG. 2:
The first stage: before replacing the network
Step s101, the new network is established, and the established new network comprises the network elements of the core network side and the wireless network side, and the network elements of the core network side comprises the GMSC, GGSN, HLR, MSC/VLR and SGSN, and network elements of the wireless network side include the RNC and the Node B. The MSC and SGSN of the core network side are connected with the RNC of the wireless network side, and each RNC connects a plurality of Node B(s), and one Node B is responsible for providing wireless communication service for users in one geographical location area, and one geographical location area includes one or more cells. The composition and the working way of the above new network are the same with those of the current network.

When the new network is established, the Node B to which the cell belongs in the new network is configured beside the Node B to which this cell belongs in the current network, and the Node B (s) in the two networks to which this cell belongs have the same physical address, and herein the Node B (s) with the same physical address are called as the Node B (s) with the same station address.

The PLMN of the new network is configured as the second public land mobile network PLMN B.

Step s102, each cell of the current network is configured with a cell of the new network with the same station address as the inter-frequency neighbor cell, and the specific process is: adding the Identification (ID) of the cell of the new network into the inter-frequency neighbor cell list of the RNC to which the Node B of the cell of the current network with the same station address belongs; and at the same time, each cell of the current network is configured with the re-selection parameter for re-selecting the cell of the new network, for example, the cell relative offset parameter Qoffset is configured to be -10dB.

Step s103, users of the current network are grouped based on the International Mobile Subscriber Identity (IMSI), thereby being able to migrate according to groups, and the specific number of groups can be determined by the specific number of users and practical demands of the operators. In this example, all the users in the current network are divided into three number segments, namely three groups, as shown in table 1, and the IMSI number segment of the first group of users is: 139*****000 ∼ 139*****049, the IMSI number segment of the second group of users is: 139*****050 ∼ 139*****099, and the IMSI number segment of the third group of users is: 139*****100 ∼139*****149.

**Table 1 the user grouping list of the current network**

| | IMSI number | EPLMN list |
|---|---|---|
| The first group of users | 139*****000 | PLMN A and PLMN B |
| | ... | |
| | 139*****049 | |
| The second group of users | 139*****050 | PLMN A |
| | ... | |
| | 139*****099 | |
| The third group of users | 139*****100 | PLMN A |
| | ... | |
| | 139*****149 | |

The second stage: in the process of replacing the network
Step s104, the MSC and SGSN send the EPLMN list including the PLMN A and PLMN B to the user group which needs to migrate every time at the core network side of the current network. Table 1 shows that the migrated one is the first group of users, and the MSC and the SGSN of the current network send the EPLMN list including the PLMN A and the PLMN B to the number segment 139*****000 ∼ 139*****049 where the first group of users are located. The MSC and SGSN of the current network do not send the EPLMN list including the PLMN A and the PLMN B to the number segment 139*****050 ∼ 139*****099 where the second group of users are located and the number segment 139*****100 ∼ 139*****149 where the third group of users are located, and the second and third group of users are only able to use the default home public land mobile network PLMN A, and therefore, the second and third group of users in table 1 do not migrate to the new network temporarily.

Step s105, the step s104 is repeated until all the users in the current network migrate into the new network.

The third stage: after all the users in the current network migrate into the new network

Step s106, the PLMN B configured in network elements of the new network which comprise the MSC and SGSN of the core network side and the RNC and the Node B of the wireless network side, is changed into the PLMN A.

Step s107, the EPLMN list reserved in the core network of the new network is deleted.

Step s108, all the network element equipment in the current network is powered off and removed.

The above method of the present invention enables users to smoothly migrate into the new network from the old network, and it can preciously control the migrating number of users and user type at the old network side every time, which avoids the risk brought by the traditional cutover method by dividing into areas.

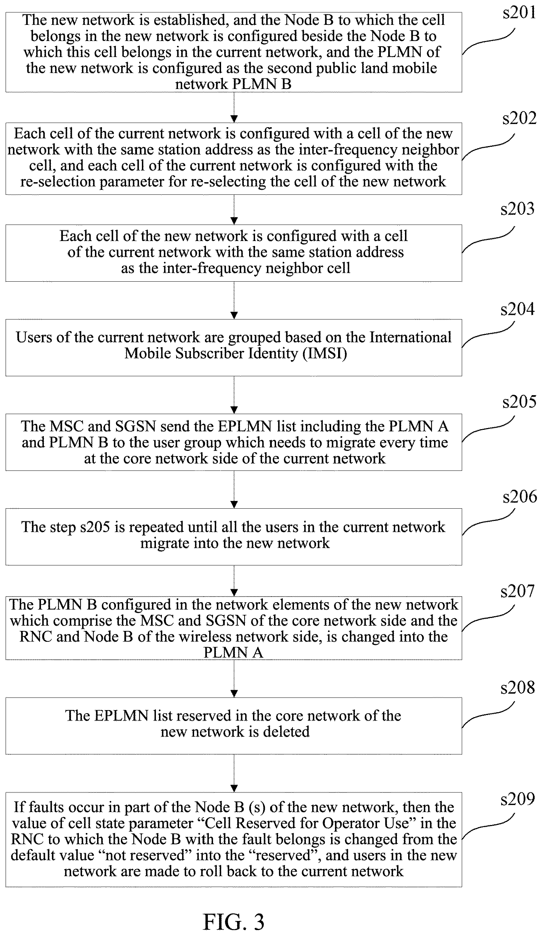

The second example of the present invention provides a method for replacing the wireless network which is able to roll back, wherein it is assumed that HPLMN used by the current network to be replaced is the first public land mobile network PLMN A, and this method comprises four stages, as shown in FIG. 3:
The first stage: before replacing the network
Step s201, the new network is established, and the established new network comprises the network elements of the core network side and wireless network side, and the network elements of the core network side comprise the GMSC, GGSN, HLR, MSC/VLR and SGSN, and the network elements of the wireless network side comprise the RNC and the Node B. The MSC and SGSN of the core network side are connected with the RNC of the wireless network side, and each RNC connects a great many Node B(s), and one Node B is responsible for providing wireless communication service for users in one geographical location area, and one geographical location area includes one or more cells. The composition and the working way of the above new network are the same as those of the current network.

When the new network is established, the Node B to which the cell belongs in the new network is configured beside the Node B to which this cell of the current network belongs, and the Node B (s) in the two networks to which this cell belongs have the same physical address, and herein the Node B (s) with the same physical address are called as the Node B with the same station address.

The PLMN of the new network is configured as the second public land mobile network PLMN B.

Step s202, each cell of the current network is configured with the cell of the new network with the same station address as the inter-frequency neighbor cell, and the specific process is: adding the ID of the cell of the new network into the inter-frequency neighbor cell list of the RNC to which the Node B of the cell of the current network with the same station address belongs; at the same time, each cell of the current network is configured with the re-selection parameter for re-selecting the cell of the new network, for example, the cell relative offset parameter Qoffset is configured to be -10dB.

Step s203, each cell of the new network is configured with the cell of the current network with the same station address as the inter-frequency neighbor cell, and the specific process is: adding the ID of the cell of the current network into the inter-frequency neighbor cell list of the RNC to which the Node B of the cell of the new network with the same station address belongs.

Preferably, each cell of the new network is further configured with the cell of the current network without the same station address as the inter-frequency neighbor cell in this example, and herein the cell of the current network without the same station address generally refers to cells of the current network centering around this cell of the new network, namely the ID(s) of cells of the current network centering around this cell of the new network are added into the inter-frequency neighbor cell list of the RNC to which the Node B of the cell of the new network with the same station address belongs. The above step of configuring the cell of the current network without the same station address is for the purpose of solving the problem that if the new network does not reach the full coverage, then users entering into the new network will roll back to the current network in the location without the coverage; when the user is just located at the border of two cells of the current network, and if a problem of the new network occurs and the user is required to roll back to the current network, then the user can roll back to the coverage area of cells of the current network with the same station address of the new network and the surrounding cells without the same station address after configuring cells of the current network without the same station address.

Step s204, users of the current network are grouped based on the International Mobile Subscriber Identity (IMSI), thereby being able to migrate according to groups, and the specific number of groups can be determined by the specific number of users and practical demands of operators.

The second stage: in the process of replacing the network

Step s205, the MSC and SGSN send the EPLMN list including the PLMN A and PLMN B to the user group which needs to migrate every time at the core network side of the current network.

Step s206, the step s205 is repeated until all the users in the current network migrate into the new network.

The third stage: after all the users in the current network migrate into the new network

Step s207, the PLMN B configured in the network elements of the new network which comprise the MSC and SGSN of the core network side and the RNC and the Node B of the wireless network side, is changed into the PLMN A.

Step s208, the EPLMN list reserved in the core network of the new network is deleted.

The fourth stage: users roll back to the current network from the new network:
Step s209, if faults occur in part of the Node B (s) of the new network, then the value of cell state parameter "Cell Reserved for Operator Use" in the RNC to which the Node B with the fault belongs is changed from the default value "not reserved" into the "reserved", then users in the new network will roll back to the current network. Users will be unable to reside in the new network, but roll back to the current network by re-selecting the cell after changing the cell state into the reserved.

When the fault is eliminated and the new network is able to work normally after being repaired, and the cell state parameter of the new network is changed into the default value "not reserved" over again, and users migrating into the new network will enter into the cell of the new network to receive mobile communication service again.

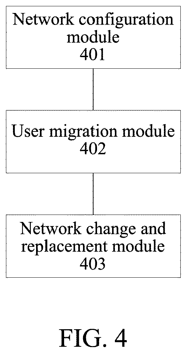

The third example of the present invention provides an apparatus for replacing the wireless network based on the EPLMN, wherein it is assumed that HPLMN used by the current network to be replaced is the first public land mobile network PLMN A, and as shown in FIG. 4, this apparatus comprises following composition parts:
a network configuration module 401, which is configured to: configure the PLMN of the established new network as the second public land mobile network PLMN B, and configure the cell of the new network with the same station address as the inter-frequency neighbor cell for each cell of the current network, and configure the re-selection parameter for re-selecting the cell of the new network for each cell of the current network.

A user migration module 402, which is configured to: send the EPLMN list including the PLMN A and PLMN B to users which need to migrate from the current network to the new network every time. Said user migration module 402 comprises a Mobile Switching Centre and a Serving GPRS Support Node.

A network change and replacement module 403, which is configured to change the PLMN of the new network into the PLMN A from the PLMN B after all the users in the current network migrate into the new network, and delete the EPLMN list reserved in the core network of the new network.

The forth example of the present invention provides an apparatus for replacing the wireless network which is able to roll back, wherein it is assumed that HPLMN used by the current network to be replaced is the first public land mobile network PLMN A, and this apparatus comprises following composition parts:
a network configuration module, which is configured to: configure the PLMN of the established new network as the second public land mobile network PLMN B, and configure the cell of the new network with the same station address as the inter-frequency neighbor cell for each cell of the current network, and configure the cell of the current network with the same station address as the inter-frequency neighbor cell for each cell of the new network, and configure the re-selection parameter for re-selecting the cell of the new network for each cell of the current network. Preferably, said network configuration module is further configured to: configure the cell of the current network without the same station address as the inter-frequency neighbor cell for each cell of the new network.

A user migration module, which is configured to: send the EPLMN list including the PLMN A and PLMN B to users which need to migrate from the current network to the new network every time. Said user migration module comprises a Mobile Switching Centre and a Serving GPRS Support Node.

A network change and replacement module, which is configured to: change the PLMN of the new network into the PLMN A from the PLMN B after all the users in the current network migrate into the new network, and delete the EPLMN list reserved in the core network of the new network.

Said network configuration module is further configured to: change the value of cell state parameter "Cell Reserved for Operator Use" in the RNC to which the Node B with the fault belongs from the default value "not reserved" into the "reserved" when faults occur in part of the Node B (s) of the new network and users in the new network are required to roll back to the current network, and make users in the new network roll back to the current network. After the cell state is changed into the "reserved", users will be unable to reside in the new network, and roll back to the current network by re-selecting the cell. When the fault is eliminated and the new network is able to work normally after being repaired, said network configuration module changes the cell state parameter of the new network into the default value "not reserved" over again, and makes users migrating into the new network enter into the cell of the new network again to receive mobile communication service.

The method and apparatus for replacing the wireless network based on the EPLMN provided in the present invention are used for establishing the new network and configuring its PLMN as the second public land mobile network PLMN B, and configuring the cell of the new network with the same station address as the inter-frequency neighbor cell for each cell of the current network; the core network side of the current network sending the EPLMN list including the first public land mobile network PLMN A and the second public land mobile network PLMN B to the user which needs to migrate every time; and changing the PLMN of the new network from the PLMN B to the PLMN A after all the users of the current network migrate to the new network, and deleting the EPLMN list of the core network side of the new network. Since users have gradually migrated to the established new network before removing the old current network equipment, and the new network is able to provide communication service for the migrated users, and at the same time the current network still provides communication service for users which have not migrated into the new network, and therefore, the drawback of interrupting providing communication service for all network users in the process of removing the old network equipment and installing the new network equipment is overcome.

Besides, since the present invention is based on the IMSI to group the users of the current network, so the present invention is able to preciously control the number of users which are migrating to the new network, and also is able to carry out special processing regarding the individual user. The migration operation is only required to send the EPLMB list including the PLMN A and PLMN B to users, and users will actively search the network with the better signal in the EPLMN list to enter, and therefore, making and updating a great amount of data in the prior art are omitted, and the workload of replacing the network is reduced.

The technical scheme of the present invention will not produce the service delay, and ensure the KPI of the network without affecting the user experience.

When a fault of the new network occurs and the new network is unable to work normally and the present invention carries out the network rollback, it is only required to change the cell state parameter of the new network, so comparing with the prior art, the network rollback is easier, and the risk of operator and equipment manufacturer is greatly reduced.

### Industrial Applicability

The method and apparatus for replacing the wireless network based on the EPLMN provided in the present invention overcome the drawback of interrupting providing communication service for users of the whole network in the process of removing the old network equipment and installing the new network equipment in the prior art, and omit making and updating a great amount of data in the prior art, and reduce the workload of replacing the network, and make the network rollback easier, and will not produce the service delay, and ensure the KPI of the network without affecting the user experience.

## Claims

1. A method for replacing a wireless network based on an Equivalent Public Land Mobile Network, EPLMN, **characterized by** comprising following steps of:
establishing (s101, s201) a new network and configuring a Public Land Mobile Network, PLMN, of the new network as a second Public Land Mobile Network, PLMN, configuring (s102, s202) a cell of the new network with a same station address for each cell of a current network as an inter-frequency neighbor cell, and configuring (s102, s202) a re-selection parameter for reselecting the cell of the new network for each cell of the current network; a Home Public Land Mobile Network, HPLMN, used by said current network to be replaced is a first PLMN;
a core network side of the current network sending (s104, s205) an EPLMN list including the first PLMN and the second PLMN to a user which needs to migrate; and
changing (s106, s207) the PLMN of the new network from the second PLMN to the first PLMN after all of users of the current network migrate into the new network, and deleting (s107, s208) the EPLMN list of the core network side of the new network;
wherein the step of configuring (s102, s202) the cell of the new network with the same station address for each cell of the current network as the inter-frequency neighbor cell comprises: configuring an identification, ID, of the cell of the new network to a radio network controller to which a base station of the cell of the current network with the same station address belongs.

2. The method for replacing the wireless network based on the EPLMN as claimed in claim 1, wherein the step of establishing (s101, s201) the new network comprises: establishing network elements of the core network side and a wireless network side, and configuring a base station of the cell of the new network with the same station address beside a base station of the cell of the current network.

3. The method for replacing the wireless network based on the EPLMN as claimed in claim 1, wherein before users migrate to the new network, this method further comprises: grouping (s103, s204) users of the current network based on an International Mobile Subscriber Identity, IMSI, thereby users being able to migrate according to groups.

4. The method for replacing the wireless network based on the EPLMN as claimed in claim 1, 2, or 3, when configuring (s102, s202) a cell of the new network with a same station address for each cell of a current network as an inter-frequency neighbor cell, and configuring (s102, s202) a re-selection parameter for reselecting the cell of the new network for each cell of the current network, further comprising:
configuring (s203) a cell of the current network with a same station address for each cell of the new network as an inter-frequency neighbor cell.

5. The method for replacing the wireless network based on the EPLMN as claimed in claim 4, wherein after establishing the new network, this method further comprises: configuring a cell of the current network without the same station address for each cell of the new network as the inter-frequency neighbor cell.

6. The method for replacing the wireless network based on the EPLMN as claimed in claim 4, wherein if a fault occurs and the new network is unable to work normally after the users of the current network migrate into the new network, then this method further comprises following steps of:
changing (s209) a value of a cell state parameter "Cell Reserved for Operator Use" of the new network into "reserved" from a default value "not reserved", and making (s209) the users which migrate into the new network roll back to the current network; and
when the new network is able to work normally after being repaired, changing (s209) the cell state parameter of the new network into the default value "not reserved" over again, and making (s209) the users which migrate into the new network enter into the cell of the new network to receive mobile communication service again.

7. The method for replacing the wireless network based on the EPLMN as claimed in claim 5, wherein if a fault occurs and the new network is unable to work normally after the users of the current network migrate into the new network, then this method further comprises following steps of:
changing a value of a cell state parameter "Cell Reserved for Operator Use" of the new network into "reserved" from a default value "not reserved", and making the users which migrate into the new network roll back to the current network; and
when the new network is able to work normally after being repaired, changing the cell state parameter of the new network into the default value "not reserved" over again, and making the users which migrate into the new network enter into the cell of the new network to receive mobile communication service again.

8. An apparatus for replacing a wireless network based on an Equivalent Public Land Mobile Network, EPLMN, **characterized by** comprising: a network configuration module (401), a user migration module (402) and a network change and replacement module (403), wherein
a Home Public Land Mobile Network, HPLMN, used by a current network to be replaced is a first Public Land Mobile Network, PLMN;
said network configuration module (401) is configured to: configure a PLMN of an established new network as a second PLMN, and configure a cell of a new network with a same station address for each cell of the current network as an inter-frequency neighbor cell, and configure a re-selection parameter for reselecting the cell of the new network for each cell of the current network;
said user migration module (402) is configured to: send an EPLMN list including the first PLMN and the second PLMN to a user which needs to migrate from the current network to the new network;
said network change and replacement module (403) is configured to: change the PLMN of the new network from the second PLMN to the first PLMN after all of users of the current network migrate into the new network, and delete the EPLMN list of a core network side of the new network;
wherein said network configuration module (401) is configured to configure the cell of the new network with the same station address for each cell of the current network as the inter-frequency neighbor cell by: configuring an identification, ID, of the cell of the new network to a radio network controller to which a base station of the cell of the current network with the same station address belongs.

9. The apparatus for replacing a wireless network based on an EPLMN as claimed in claim 8, wherein
said network configuration module (401) is further configured to: configure a cell of the current network with a same station address for each cell of the new network as an inter-frequency neighbor cell.

10. The apparatus for replacing a wireless network based on an EPLMN as claimed in claim 9, wherein said network configuration module (401) is further configured to: configure a cell of the current network without the same station address for each cell of the new network as the inter-frequency neighbor cell.

11. The apparatus for replacing a wireless network based on an EPLMN as claimed in claim 9 or 10, wherein said network configuration module (401) is further configured to: change a value of a cell state parameter "Cell Reserved for Operator Use" of the new network into "reserved" from a default value "not reserved" when a fault occurs and the new network is unable to work normally, and make the user which migrates into the new network roll back to the current network; and when the new network is able to work normally after being repaired, change the cell state parameter of the new network into the default value "not reserved", and make the user which migrates into the new network enter into the cell of the new network to receive mobile communication service over again.

## Patentansprüche

1. Verfahren zum Ersetzen eines drahtlosen Netzwerks basierend auf einem äquivalenten öffentlichen terrestrischen Mobilnetzwerk, EPLMN, wobei das Verfahren **dadurch gekennzeichnet ist, dass** es die folgenden Schritte umfasst:
Einrichten (s101, s201) eines neuen Netzwerks und Konfigurieren eines öffentlichen terrestrischen Mobilnetzwerks, PLMN, des neuen Netzwerks als ein zweites öffentliches terrestrisches Mobilnetzwerk, PLMN, Konfigurieren (s102, s202) einer Zelle des neuen Netzwerks mit einer gleichen Stationsadresse für jede Zelle eines derzeitigen Netzwerks als eine Zwischenfrequenz-Nachbarzelle, und Konfigurieren (s102, s202) eines Re-Selektions-Parameters, um die Zelle des neuen Netzwerks für jede Zelle des derzeitigen Netzwerks neu auszuwählen; wobei ein öffentliches terrestrisches Home-Mobilnetzwerk, HPLMN, welches von dem zu ersetzenden derzeitigen Netzwerk verwendet wird, ein erstes PLMN ist;
Senden (s104, s205), von einer Kernnetzwerkseite des derzeitigen Netzwerks, einer EPLMN Liste, welche das erste PLMN und das zweite PLMN umfasst, an einen Nutzer, welcher übergehen soll; und
Ändern (s106, s207) des PLMN des neuen Netzwerks von dem zweiten PLMN auf das erste PLMN, nachdem alle Nutzer des derzeitigen Netzwerks auf das neue Netzwerk übergegangen sind, und Entfernen (s107, s208) der EPLMN Liste der Kernnetzwerkseite des neuen Netzwerks;
wobei der Schritt des Konfigurierens (s102, s202) der Zelle des neuen Netzwerks mit der gleichen Stationsadresse für jede Zelle des derzeitigen Netzwerks als die Zwischenfrequenz-Nachbarzelle umfasst: Konfigurieren einer Identifizierung, ID, der Zelle des neuen Netzwerks auf einem Funknetzwerk-Controller, zu welchem eine Basisstation der Zelle des derzeitigen Netzwerks mit der gleichen Stationsadresse gehört.

2. Verfahren zum Ersetzen des drahtlosen Netzwerks basierend auf dem EPLMN nach Anspruch 1, wobei der Schritt des Einrichtens (s101, s201) des neuen Netzwerks umfasst:
Einrichten von Netzwerkelementen der Kernnetzwerkseite und einer drahtlosen Netzwerkseite, und Konfigurieren einer Basisstation der Zelle des neuen Netzwerks mit der gleichen Stationsadresse neben einer Basisstation der Zelle des derzeitigen Netzwerks.

3. Verfahren zum Ersetzen des drahtlosen Netzwerks basierend auf dem EPLMN nach Anspruch 1, wobei das Verfahren, bevor Nutzer auf das neue Netzwerk übergehen, ferner umfasst:
Gruppieren (s103, s204) von Nutzern des derzeitigen Netzwerks basierend auf einer internationalen Mobilfunk-Teilnehmerkennung, IMSI, sodass Nutzer gemäß der Gruppen übergehen können.

4. Verfahren zum Ersetzen des drahtlosen Netzwerks basierend auf dem EPLMN nach einem der Ansprüche 1, 2 oder 3, wobei das Verfahren beim Konfigurieren (s102, s202) einer Zelle des neuen Netzwerks mit einer gleichen Stationsadresse für jede Zelle eines derzeitigen Netzwerks als eine Zwischenfrequenz-Nachbarzelle und beim Konfigurieren (s102, s202) eines Re-Selektions-Parameters, um die Zelle des neuen Netzwerks für jede Zelle des derzeitigen Netzwerks neu auszuwählen, ferner umfasst:
Konfigurieren (s203) einer Zelle des derzeitigen Netzwerks mit einer gleichen Stationsadresse für jede Zelle des neuen Netzwerks als eine Zwischenfrequenz-Nachbarzelle.

5. Verfahren zum Ersetzen des drahtlosen Netzwerks basierend auf dem EPLMN nach Anspruch 4, wobei das Verfahren nach dem Einrichten des neuen Netzwerks ferner umfasst:
Konfigurieren einer Zelle des derzeitigen Netzwerks ohne die gleiche Stationsadresse für jede Zelle des neuen Netzwerks als die Zwischenfrequenz-Nachbarzelle.

6. Verfahren zum Ersetzen des drahtlosen Netzwerks basierend auf dem EPLMN nach Anspruch 4, wobei, wenn ein Fehler auftritt und das neue Netzwerk nicht in der Lage ist, normal zu funktionieren, nachdem die Nutzer des derzeitigen Netzwerks auf das neue Netzwerk übergehen, das Verfahren dann zusätzlich die folgenden Schritte umfasst:
Ändern (s209) eines Wertes eines Zellen-Status-Parameters "Zelle reserviert für Betreibernutzung" des neuen Netzwerks auf "reserviert" von einem Standardwert "nicht reserviert" und Veranlassen (s209) der Nutzer, welche auf das neue Netzwerk übergehen, auf das derzeitige Netzwerk zurückzufallen; und
wenn das neue Netzwerk in der Lage ist, normal zu funktionieren, nachdem es repariert wurde, Zurückändern (s209) des Zellen-Status-Parameters des neuen Netzwerks auf den Standardwert "nicht reserviert", und Veranlassen (s209) der Nutzer, welche auf das neue Netzwerk übergehen, der Zelle des neuen Netzwerks beizutreten, um wieder Mobilkommunikationsdienste zu empfangen.

7. Verfahren zum Ersetzen des drahtlosen Netzwerks basierend auf dem EPLMN nach Anspruch 5, wobei, wenn ein Fehler auftritt und das neue Netzwerk nicht der Lage ist, normal zu funktionieren, nachdem die Nutzer des derzeitigen Netzwerks auf das neue Netzwerk übergehen, das Verfahren dann zusätzlich die folgenden Schritte aufweist:
Ändern eines Wertes eines Zellen-Status-Parameters "Zelle reserviert für Betreibernutzung" des neuen Netzwerks auf "reserviert" von einem Standardwert "nicht reserviert" und Veranlassen der Nutzer, welche auf das neue Netzwerk übergehen, auf das derzeitige Netzwerk zurückzufallen; und
wenn das neue Netzwerk in der Lage ist, normal zu funktionieren, nachdem es repariert wurde, Zurückändern des Zellen-Status-Parameters des neuen Netzwerks auf den Standardwert "nicht reserviert" und Veranlassen der Nutzer, welche auf das neue Netzwerk übergehen, der Zelle des neuen Netzwerks beizutreten, um wieder Mobilkommunikationsdienste zu empfangen.

8. Vorrichtung zum Ersetzen eines drahtlosen Netzwerks basierend auf einem äquivalenten öffentlichen terrestrischen Mobilnetzwerk, EPLMN, welche **dadurch gekennzeichnet ist, dass** sie umfasst:
ein Netzwerk-Konfigurationsmodul (401), ein Nutzerübergangsmodul (402) und ein Netzwerkänderungs- und Ersetzungsmodul (403),
wobei ein öffentliches terrestrisches Home-Mobilnetzwerk, HPLMN, welches von einem zu ersetzenden derzeitigen Netzwerk verwendet wird, ein erstes öffentliches terrestrisches Mobilnetzwerk, PLMN, ist;
wobei das Netzwerk-Konfigurationsmodul (401) eingerichtet ist: ein PLMN eines eingerichteten neuen Netzwerks als ein zweites PLMN zu konfigurieren und eine Zelle eines neuen Netzwerks mit einer gleichen Stationsadresse für jede Zelle des derzeitigen Netzwerks als ein Zwischenfrequenz-Nachbarzelle zu konfigurieren und einen Re-Selektions-Parameter für ein Neuauswählen der Zelle des neuen Netzwerks für jede Zelle des derzeitigen Netzwerks zu konfigurieren;
wobei das Nutzerübergangsmodul (402) eingerichtet ist: eine EPLMN-Liste, welche das erste PLMN und das zweite PLMN umfasst, an einen Nutzer zu senden, welcher von dem derzeitigen Netzwerk auf das neue Netzwerk übergehen soll;
wobei das Netzwerksänderungs- und Ersetzungsmodul (403) eingerichtet ist: das PLMN des neuen Netzwerks von dem zweiten PLMN auf das erste PLMN zu ändern,
nachdem alle Nutzer des derzeitigen Netzwerks auf das neue Netzwerk übergegangen sind, und die EPLMN-Liste einer Kernnetzwerkseite des neuen Netzwerks zu entfernen;
wobei das Netzwerk-Konfigurationsmodul (401) eingerichtet ist, die Zelle des neuen Netzwerks mit der gleichen Stationsadresse für jede Zelle des derzeitigen Netzwerks als die Zwischenfrequenz-Nachbarzelle zu konfigurieren, indem: es eine Identifikation, ID, der Zelle des neuen Netzwerks auf einem Funknetzwerk-Controller konfiguriert, zu welchem eine Basisstation der Zelle des derzeitigen Netzwerks mit der gleichen Stationsadresse gehört.

9. Vorrichtung zum Ersetzen eines drahtlosen Netzwerks basierend auf einem EPLMN nach Anspruch 8, wobei
das Netzwerk-Konfigurationsmodul (401) ferner eingerichtet ist: eine Zelle des derzeitigen Netzwerks mit einer gleichen Stationsadresse für jede Zelle des neuen Netzwerks als eine Zwischenfrequenz-Nachbarzelle zu konfigurieren.

10. Vorrichtung zum Ersetzen eines drahtlosen Netzwerks basierend auf einem EPLMN nach Anspruch 9, wobei das Netzwerk-Konfigurationsmodul (401) ferner eingerichtet ist: eine Zelle des derzeitigen Netzwerks ohne die gleiche Stationsadresse für jede Zelle des neuen Netzwerks als die Zwischenfrequenz-Nachbarzelle zu konfigurieren.

11. Vorrichtung zum Ersetzen eines drahtlosen Netzwerks basierend auf einem EPLMN nach Anspruch 9 oder 10, wobei das Netzwerk-Konfigurationsmodul (401) ferner eingerichtet ist: einen Wert eines Zellen-Status-Parameters "Zelle reserviert für Betreibernutzung" des neuen Netzwerks auf "auf reserviert" von einem Standardwert "nicht reserviert" zu ändern, wenn ein Fehler auftritt und das neue Netzwerk nicht in der Lage ist, normal zu funktionieren, und den Nutzer, welcher auf das neue Netzwerk übergeht, dazu zu veranlassen, auf das derzeitige Netzwerk zurückzufallen; und, wenn das neue Netzwerk, nachdem es repariert wurde, in der Lage ist, normal zu funktionieren, den Zellen-Status-Parameter des neuen Netzwerks auf den Standardwert "nicht reserviert" zu ändern, und den Nutzer, welcher auf das neue Netzwerk übergeht, zu veranlassen, der Zelle des neuen Netzwerks beizutreten, um wieder Mobilkommunikationsdienste zu empfangen.

## Revendications

1. Procédé de remplacement d'un réseau sans fil basé sur un réseau mobile terrestre public équivalent (Equivalent Public Land Mobile Network, EPLMN), **caractérisé en ce qu'**il comprend les étapes consistant à :
établir (s101, s201) un nouveau réseau et configurer un réseau mobile terrestre public (Public Land Mobile Network, PLMN) du nouveau réseau en tant que second réseau mobile terrestre public (PLMN),
configurer (s102, s202) une cellule dans le nouveau réseau avec la même adresse de station pour chaque cellule dans le réseau actuel sous la forme d'une cellule voisine inter-fréquence, et configurer (s101, s202) un paramètre de resélection pour resélectionner la cellule du nouveau réseau pour chaque cellule du réseau actuel ; un côté de réseau central dans le réseau actuel envoie une liste d'EPLMN comprenant un premier PLMN et le second PLMN à un utilisateur qui doit être transféré à chaque fois ; un réseau mobile terrestre publique domestique (Home Public Land Mobile Network, HPLMN), utilisé par ledit réseau actuel à remplacer est un premier PLMN ;
un côté de réseau central du réseau actuel envoyant (s104, s205) une liste EPLMN comprenant le premier PLMN et le second PLMN à un utilisateur demandant de migrer ; et
changer (s106, s207) le PLMN du nouveau réseau du second PLMN au premier PLMN une fois que tous les utilisateurs du réseau actuel migrent dans le nouveau réseau, et supprimer (s107, s208) la liste d'EPLMN sur le côté de réseau central du nouveau réseau ;
dans lequel l'étape de configurer (s102, s202) la cellule du nouveau réseau avec la même adresse de station pour chaque cellule du réseau actuel que la cellule voisine inter-fréquence comprend l'étape consistant à : configurer une identification, ID, de la cellule du nouveau réseau pour un contrôleur de réseau radio auquel appartient une station de base de la cellule du réseau actuel avec la même adresse de station.

2. Procédé de remplacement du réseau sans fil basé sur le EPLMN selon la revendication 1, dans lequel l'étape d'établir (s101, S201) le nouveau réseau comprend l'étape consistant à : établir des éléments de réseau sur le côté réseau central et sur un côté de réseau sans fil, et configurer une station de base de la cellule du nouveau réseau avec la même adresse de station à côté d'une station de base de la cellule du réseau actuel.

3. Procédé de remplacement du réseau sans fil basé sur le EPLMN selon la revendication 1 dans lequel, avant la migration des utilisateurs vers le nouveau réseau, ledit procédé comprend également l'étape consistant à : regrouper (s103, S204) les utilisateurs du réseau actuel sur la base d'une identité d'abonné mobile international (International Mobile Subscriber Identity, IMSI), les utilisateurs étant ainsi en mesure de migrer en groupes.

4. Procédé de remplacement du réseau sans fil basé sur le EPLMN selon la revendication 1, 2, ou 3, dans lequel configurer (s102, s202) une cellule du nouveau réseau avec la même adresse de station pour chaque cellule d'un réseau actuel en tant que cellule voisine inter-fréquence, et configurer (s102, s202) un paramètre de resélection pour resélectionner la cellule du nouveau réseau pour chaque cellule du réseau actuel, comprend également :
configurer (s203) une cellule du réseau actuel avec une même adresse de station pour chaque cellule du nouveau réseau en tant que cellule voisine inter-fréquence.

5. Procédé de remplacement du réseau sans fil basé sur le EPLMN selon la revendication 4, dans lequel, une fois le nouveau réseau établi, ledit procédé comprend également l'étape consistant à : configurer une cellule du réseau actuelle avec la même adresse de station pour chaque cellule du nouveau réseau en tant que cellule voisine inter-fréquence.

6. Procédé de remplacement du réseau sans fil basé sur le EPLMN selon la revendication 4 dans laquelle, en cas de défaut, si le nouveau réseau est incapable de fonctionner normalement après la migration des utilisateurs du réseau actuel au nouveau réseau, ledit procédé comprend également les étapes suivantes, consistant à :
changer (S209) une valeur d'un paramètre d'état de cellule indiquant une cellule réservée à l'usage de l'opérateur, « Cell Reserved for Operator Use » du nouveau réseau d'une valeur par défaut «not reserved » à une valeur « reserved », et ramener (s209) les utilisateurs migrant vers le nouveau réseau au réseau actuel; et
lorsque le nouveau réseau est en mesure de fonctionner normalement après avoir été réparé, changer (S209) de nouveau le paramètre d'état de cellule du nouveau réseau dans la valeur par défaut « not reserved » et faire rentrer (S209) les utilisateurs migrant vers le nouveau réseau dans la cellule du nouveau réseau pour recevoir à nouveau le service de communication mobile.

7. Procédé de remplacement du réseau sans fil basé sur le EPLMN selon la revendication 5 dans laquelle, en cas de défaut, si le nouveau réseau est incapable de fonctionner normalement après la migration des utilisateurs du réseau actuel au nouveau réseau, ledit procédé comprend également les étapes suivantes, consistant à :
changer une valeur d'un paramètre d'état de cellule indiquant une cellule réservée à l'usage de l'opérateur, « Cell Reserved for Operator Use » du nouveau réseau d'une valeur par défaut «not reserved » à une valeur « reserved », et ramener les utilisateurs migrant vers le nouveau réseau au réseau actuel; et
lorsque le nouveau réseau est en mesure de fonctionner normalement après avoir été réparé, changer de nouveau le paramètre d'état de cellule du nouveau réseau dans la valeur par défaut « not reserved » et faire recevoir de nouveau aux utilisateurs migrant vers le nouveau réseau dans la cellule du nouveau réseau le service de communication mobile.

8. Appareil de remplacement d'un réseau sans fil basé sur un réseau mobile terrestre public équivalent (Equivalent Public Land Mobile Network, EPLMN), **caractérisé en ce qu'**il comprend : un module de configuration de réseau (401), un module de migration d'utilisateurs (402) et un module de changement et de remplacement de réseau (403), dans lequel
un réseau mobile terrestre public domestique, HPLMN, utilisé par un réseau actuel devant être remplacé est un premier réseau mobile terrestre public, PLMN ;
ledit module de configuration de réseau (401) est conçu pour : configurer un PLMN d'un nouveau réseau établi en tant que second PLMN, et configurer une cellule d'un nouveau réseau avec une même adresse de station pour chaque cellule du réseau actuel en tant que cellule voisine inter-fréquence, et configurer un paramètre de resélection pour resélectionner la cellule du nouveau réseau pour chaque cellule du réseau actuel;
ledit module de migration d'utilisateurs (402) est conçu pour : envoyer une liste comprenant le premier PLMN et le second PLMN à un utilisateur demandant de migrer du réseau actuel au nouveau réseau ;
ledit module de changement et de remplacement de réseau (403) conçu pour : changer le PLMN du nouveau réseau du second PLMN au premier PLMN une fois que tous les utilisateurs du réseau actuel migrent dans le nouveau réseau, et supprimer la liste d'EPLMN sur un côté de réseau central du nouveau réseau ;
dans lequel ledit module de configuration de réseau (401) est conçu pour configurer la cellule du nouveau réseau avec la même adresse de station pour chaque cellule du réseau actuel
en tant que cellule voisine inter-fréquence au moyen des étapes consistant à : configurer une identification, ID, de la cellule du nouveau réseau pour un contrôleur de réseau radio auquel appartient une station de base de la cellule du réseau actuel avec la même adresse de station.

9. Appareil de remplacement d'un réseau sans fil sur la base d'un EPLMN selon la revendication 8, dans lequel
ledit module de configuration de réseau (401) est également conçu pour : configurer une cellule du réseau actuel avec une même adresse de station pour chaque cellule du nouveau réseau en tant que cellule voisine inter-fréquence.

10. Appareil de remplacement d'un réseau sans fil basé sur un EPLMN selon la revendication 9, dans lequel ledit module de configuration de réseau (401) est également conçu pour : configurer une cellule du réseau actuelle avec la même adresse de station pour chaque cellule du nouveau réseau en tant que cellule voisine inter-fréquence.

11. Appareil de remplacement d'un réseau sans fil sur la base d'un EPLMN selon la revendication 9 ou 10, dans lequel ledit module de configuration de réseau (401) est également conçu pour : changer une valeur d'un paramètre d'état de cellule indiquant une cellule réservée à l'usage de l'opérateur, « Cell Reserved for Operator Use » du nouveau réseau d'une valeur par défaut «not reserved » à une valeur par défaut « reserved » en présence d'un défaut, si le nouveau réseau est incapable de travailler normalement, et ramener l'utilisateur migrant vers le nouveau réseau au réseau actuel; et lorsque le nouveau réseau est en mesure de fonctionner normalement après avoir été réparé, changer le paramètre d'état de cellule du nouveau réseau sur la valeur par défaut « not reserved », et faire recevoir de nouveau à l'utilisateur migrant vers le nouveau réseau dans la cellule du nouveau réseau le service de communication mobile.
